# EUROPÄISCHE PATENTANMELDUNG

(11) **EP 1 779 752 A1**
(43) Veröffentlichungstag der Anmeldung: **02.05.2007**
(21) Anmeldenummer: 05405611.4
(22) Anmeldetag: 28.10.2005
(51) Int. Cl.: A47G 27/02, H02J 5/00

(54) **Anordnung zur Versorgung eines Verbrauchers mit elektrischer Energie**

(71) Anmelder: Lantal Textiles, CH-4901 Langenthal (CH)
(72) Erfinder: Baumann, Urs, 4912 Aarwangen (CH)
(74) Vertreter: Roshardt, Werner Alfred

(57) **Zusammenfassung**

Eine Anordnung zur Versorgung eines Verbrauchers mit elektrischer Energie einer Stromquelle umfasst einen textilen, gewobenen Bodenbelag (101) mit längslaufenden Kettfäden und querlaufenden Schussfäden, wobei drei oder mehr beabstandete, zueinander im Wesentlichen parallele Stromleiter (106) entweder als Kettfäden oder als Schussfäden eingewoben sind, eine Einspeisung zum Anschluss der Stromleiter (106) an die Stromquelle und eine Kopplungseinrichtung (130) zur Aufnahme von elektrischer Energie aus den Stromleitern (106) im Bodenbelag (101) und zum Weitertransport an den Verbraucher, wenn die Kopplungseinrichtung (130) in einen Stromaufnahmebereich des Bodenbelags (101) gebracht wird. Die Kopplungseinrichtung (130) ist insbesondere derart ausgebildet, dass elektrische Energie induktiv aus den im Bodenbelag verlaufenden Stromleitern (106) aufgenommen werden kann. Die Versorgungsanordnung ermöglicht eine hohe Flexibilität und lässt sich gut in Räume integrieren.

## Beschreibung

### Technisches Gebiet

Die Erfindung betrifft eine Anordnung zur Versorgung eines Verbrauchers mit elektrischer Energie einer Stromquelle. Die Erfindung betrifft weiter einen textilen, gewobenen Bodenbelag mit längslaufenden Kettfäden und querlaufenden Schussfäden.

### Stand der Technik

Verbraucher werden in der Regel mit Strom versorgt, indem ein Anschlusskabel an eine (Netz-)Steckdose angeschlossen wird. Dies schafft oft Probleme: So können Steckdosen nicht an sämtliche Orten vorgesehen werden, wo allenfalls einmal Strom benötigt wird; in der Raummitte, fern von Raumwänden ist die Anbringung von Steckdosen besonders schwierig - der Einbau in den Boden ist teuer und ästhetisch meist wenig befriedigend, zumal dann wenn die Steckdosen in Benutzung sind. Zur Versorgung von Verbrauchern sind aus diesen Gründen oft recht lange Anschlusskabel notwendig. Werden diese lose über den Boden verlegt, wird die Raumästhetik beeinträchtigt, die Kabel stellen zudem Hindernisse und Stolperfallen dar. Die Kabel können zwar gelegentlich unter einem Bodenbelag verlegt werden, wonach aber die Verbraucher (z. B. Ständerleuchten, Beleuchtungsmittel frei stehender Einrichtungselemente, Computer etc.) nicht mehr flexibel positioniert werden können.

Ein besonderes Problem stellt die Stromversorgung von beweglichen Verbrauchern (z. B. Fahrzeugen zum Lasten- und/oder Personentransport, selbstgesteuerten Staubsaugern etc.) mit Elektroantrieb dar. Es ist bekannt, solche Einheiten mit Akkumulatoren auszurüsten. Zum Aufladen derselben wird die Einheit periodisch zu einer Ladestation geladen, wo eine Kabel- oder Steckverbindung zwischen dem Fahrzeug und einer Ladebuchse bzw. Lade-Steckdose der Ladestation hergestellt wird. Diese Lösung bedingt aber, dass die Einheiten für den Ladevorgang stets zu einer Ladestation zurückkehren und während des Ladevorgangs nicht zur Verfügung stehen. Oft müssen zudem Kabel bereitgestellt oder mitgeführt werden, um das Fahrzeug mit der Ladestation zu verbinden.

Es ist bekannt, Stromverbraucher mittels Induktion an eine Versorgungsleitung zu koppeln. Die WO 96/02970 (Auckland Uniservices Limited) zeigt eine induktiv gespeiste Lampeneinheit mit einer Kopplungseinrichtung, die einen Resonanzkreis umfasst, mittels welchem Strom induktiv aus zwei parallelen langen geraden Kabeln aufgenommen werden kann. Die Lampeneinheit kann beispielsweise einen Strassenreflektor bilden, wobei die langen Kabel unterhalb des Strassenbelags in einem entsprechenden Spalt untergebracht werden können.

### Darstellung der Erfindung

Aufgabe der Erfindung ist es, eine dem eingangs genannten technischen Gebiet zugehörende Anordnung zur Versorgung eines Verbrauchers mit elektrischer Energie zu schaffen, welche eine hohe Flexibilität ermöglicht und sich gut in Räume integrieren lässt.

Die Lösung der Aufgabe ist durch die Merkmale des Anspruchs 1 definiert. Gemäss der Erfindung umfasst die Anordnung
a) einen textilen, gewobenen Bodenbelag (Teppich) mit längslaufenden Kettfäden und querlaufenden Schussfäden, wobei drei oder mehr beabstandete, zueinander im Wesentlichen parallele Stromleiter entweder als Kettfäden oder als Schussfäden eingewoben sind;
b) eine Einspeisung zum Anschluss der Stromleiter an die Stromquelle; und
c) eine Kopplungseinrichtung zur Aufnahme von elektrischer Energie aus den Stromleitern im Bodenbelag und zum Weitertransport an den Verbraucher, wenn die Kopplungseinrichtung in einen Stromaufnahmebereich des Bodenbelags gebracht wird.

Diese Lösung ermöglicht eine hohe Flexibilität bei der Stromversorgung, indem der zu versorgende Verbraucher weitgehend beliebig auf dem flächigen Bodenbelag positioniert werden kann, ohne dass Anpassungen an der Versorgungsanordnung (wie die Verlegung von Kabeln) notwendig sind. Der Bodenbelag nimmt seine üblichen Aufgaben weiterhin ohne Beeinträchtigung wahr, d. h. er ist uneingeschränkt begehbar, schafft ein angenehmes Raumklima und die gewünschte Ästhetik. Die Stromversorgung ist praktisch nicht sichtbar und stellt somit keine Beeinträchtigung der Raumgestaltung dar.

Die Anordnung ermöglicht zudem auf eine einfache Weise eine Stromversorgung im gesamten, mit dem Bodenbelag versehenen Raumbereich. Der Teppich wird nämlich wie üblich verlegt (z. B. verklebt oder eingespannt), zusätzlich muss lediglich die Einspeisung an die Stromquelle (z. B. einen üblichen Netzanschluss) angeschlossen werden. Der Verbraucher kann dann mittels der Kopplungseinrichtung mit elektrischer Energie versorgt werden, sobald letztere in den Stromaufnahmebereich des Bodenbelags gebracht wird.

Der Stromaufnahmebereich ist beispielsweise ein Volumen oberhalb der gesamten Bodenbelagsfläche bis zu einem gewissen Maximalabstand vom Boden. Im einfachsten Fall wird die Kopplungseinrichtung einfach auf den Boden gestellt und stellt dann einen Kontakt mit den Stromleitern her.

Die Kopplungseinrichtung kann in dasselbe Gehäuse wie der Verbraucher eingebaut sein (z. B. in den Sockel einer Ständerleuchte) oder es kann eine gesonderte Kopplungseinheit eingesetzt werden, welche die aufgenommene Energie derart umformt, dass übliche Verbraucher ohne weiteres an die Kopplungseinheit angeschlossen werden können. Die Kopplungseinheit kann beispielsweise eine Steckdose aufweisen, an welcher die übliche Netzspannung (230 V 50 Hz) bereitgestellt wird.

Weil die Stromleiter einen Teil des Teppichgewebes bilden, lassen sie sich direkt beim Weben des Teppichs einarbeiten, somit entfallen zusätzliche Verfahrensschritte bei der Herstellung, und der Teppich entspricht in seinen wesentlichen Eigenschaften als Bodenbelag seinem Pendant ohne Stromleiter. Die Stromleiter sind zudem fest in das Gewebe integriert und somit weitgehend vor äusseren Einflüssen geschützt.

Bevorzugt ist die Kopplungseinrichtung derart ausgebildet, dass elektrische Energie induktiv aus den Stromleitern aufgenommen werden kann. So erübrigt sich ein direkter (leitender) Kontakt zwischen der Kopplungseinrichtung und den Stromleitern und die Stromübertragung ist auch dann möglich, wenn die leitenden Elemente des Bodenbelags nicht unmittelbar von dessen Oberfläche her kontaktierbar sind. Die Energieübertragung wird beispielsweise ermöglicht, indem die Kopplungseinheit lediglich an beliebiger Stelle auf den erfindungsgemässen Bodenbelag gestellt wird. Dass eine für die meisten Anwendungen ausreichende induktive Energieübertragung bei der Versorgung mittels parallelen Leitern technisch möglich ist, ist beispielsweise in der bereits oben erwähnten WO 96/02970 (Auckland Uniservices Limited) dargelegt.

Die induktive Kopplungseinrichtung umfasst mit Vorteil mindestens eine Windung zur induktiven Kopplung mit den Stromleitern, bevorzugt ist mindestens eine Spule mit einer Vielzahl von Windungen vorgesehen. Die Windung bzw. Spule wird bezüglich der Stromleiter so positioniert, dass sie von dem vom (primären) Strom in den Stromleitern erzeugten magnetischen Fluss durchflossen und so in der Windung bzw. Spule ein (sekundärer) Strom induziert wird. Damit eine möglichst verlustarme Energieübertragung möglich ist, handelt es sich beim primären Strom mit Vorteil um einen Wechselstrom mit einer Frequenz von 200 Hz bis 2 MHz, bevorzugt ca. 10 - 50 kHz, die Windung der Kopplungseinrichtung ist zudem bevorzugt Teil eines Schwingkreises, dessen Resonanzfrequenz mit der Frequenz des Primärstroms übereinstimmt. Die Stromstärke im Stromleiter beträgt typischerweise 1 - 25 A, die Spannung 10 - 80 V. Zur Verbesserung der induktiven Übertragung kann in der Kopplungseinrichtung eine Spule mit Ferritkern eingesetzt werden.

Damit unabhängig von der genauen Positionierung der Kopplungseinrichtung auf dem Bodenbelag eine Energieübertragung möglich ist, umfasst die Kopplungseinrichtung mit Vorteil mehrere räumlich verteilte Windungen, welche nach Bedarf zusammenschaltbar sind. Die mittels einer Windung (oder eine Spule mit mehreren übereinander liegenden Windungen) aufnehmbare Energie hängt von der relativen Position der Windung zu den Stromleitern ab. In gewissen Positionen lässt sich keine oder nur eine geringe Energie übertragen, weil sich der von den beteiligten Stromleitern erzeugte magnetische Fluss innerhalb die Windungen (annähernd) zu Null aufhebt. Sind mehrere, geeignet räumlich verteilte Windungen vorgesehen, so wird stets in mindestens einer der Windungen ein Strom induziert. Die Kopplungseinrichtung weist nun eine Steuereinheit auf, welche die verschiedenen Windungen (oder die verschiedenen Spulen) geeignet zusammenschaltet, so dass ein maximaler Strom zur Verfügung steht. Beispielsweise wird der in jeder Windung (oder Spule) erzeugte Strom einzeln gemessen, und anschliessend werden alle Windungen (bzw. Spulen) mit Strömen einer ersten Richtung parallel geschaltet, während die restlichen Windungen (bzw. Spulen) mit Strömen der entgegengesetzten Richtung antiparallel dazu geschaltet werden. Je nach den eingesetzten Primärströmen und -spannungen und den gewünschten Sekundärströmen und Spannungen kann auch eine Serieschaltung gewählt werden.

Bei einer einfacheren Lösung ist nur eine einzelne Windung bzw. Spule vorhanden und die Kopplungseinrichtung wird passend zu den Stromleitern im Bodenbelag ausgerichtet. Dazu können an der Kopplungseinrichtung sowie am Bodenbelag einander entsprechende Markierungen vorgesehen sein, oder die Kopplungseinrichtung weist eine Anzeigevorrichtung für die korrekte Ausrichtung auf, z. B. eine LED-Lampe, welche bei korrekter Positionierung aufleuchtet.

Damit die an die Kopplungseinrichtung angeschlossene oder diese enthaltende Verbraucher geeignet mit Strom versorgt werden können, umfasst die Kopplungseinrichtung weitere Komponenten (z. B. Transformatoren, Schalter, Gleich- und/oder Wechselrichter, DSPs etc.) zur Stromregelung, um die erhaltenen Sekundärströme in einen gewünschten Nutzstrom zu transformieren. Entsprechende Komponenten und Schaltkreise sind aus dem Stand der Technik an sich bekannt.

Anstelle einer induktiven Aufnahme des Stroms aus den Stromleitern kommt auch ein direkter, leitender Kontakt in Frage, z. B. mittels dünnen, nadelartigen Elementen, welche den Teppichflor durchdringen und die Stromleiter kontaktieren. Durch die dünnen nadelartigen Elemente wird der Flor des Teppichs nicht beschädigt. Damit die Stromleiter unabhängig von der Positionierung der Kopplungseinrichtung stets von den nadelartigen Elementen kontaktiert werden, kann eine Matrix solcher Elemente vorgesehen sein, deren Grösse und Nadelabstand an die Dimensionen und die Abstände der Stromleiter angepasst sind. Nur für die Übertragung geringer Leistungen kommen schliesslich eine kapazitive Anbindung des Verbrauchers oder die Übertragung der Energie durch das elektromagnetische Feld, bei welcher die Stromleiter gleichsam Antennen bilden, in Frage.

Die Kontaktierung der Stromleiter zur Versorgung mit Energie aus der Stromquelle erfolgt mit Vorteil durch Flachkontakte, welche am Rand des Bodenbelags angeordnet sind und eine leitende Verbindung zu den Stromleitern aufweisen. Die Flachkontakte können beispielsweise an der Bodenbelagsunterseite befestigt sein und die Stromleiter von unten her kontaktieren, oder sie erstrecken sich zumindest teilweise in den Bereich seitlich des Bodenbelags und kontaktieren die Stromleiter von der Seite her, d. h. in der Ebene der Stromleiter. Die einzelnen Kontakte können mit an sich bekannten Flachkabeln miteinander verbunden werden und in einer Anschlussklemme münden, an welcher ein übliches Kabel zur Stromzuführung angeschlossen werden kann.

Die Kontaktierung des Bodenbelags kann an einer einzigen Seite erfolgen, wobei an der in Richtung der Stromleiter gegenüberliegenden Seite die Stromleiter miteinander verbunden sind, um geschlossene Stromkreise zu bilden, oder die Kontaktierung erfolgt beidseitig. Die Verbindung der Stromleiter auf der Gegenseite kann bereits bei der Fertigung des Bodenbelags hergestellt werden, oder es wird ein zusätzliches Verbindungselement eingesetzt, welches beispielsweise wiederum auf der Unterseite des Bodenbelags befestigt werden kann.

Die Einspeisung ist mit Vorteil derart ausgebildet und angeordnet, dass Stromrichtungen in benachbarten parallelen Stromleitern jeweils entgegengesetzt sind. So wird einerseits erreicht, dass sich die magnetischen Felder im Zwischenraum benachbarter Stromleiter konstruktiv überlagern, andererseits können einfache Leitertopologien eingesetzt werden, welche nur einseitig kontaktiert werden müssen. An der einen Kante des Bodenbelags, an welcher die Stromleiter münden, sind beispielsweise jeweils zwei benachbarte Leiter miteinander leitend verbunden, während an der gegenüberliegenden Kante die Einspeisung erfolgt.

Bei einer entsprechenden Dimensionierung und/oder Positionierung der Windungen (bzw. Spulen) der Kopplungseinrichtung lässt sich aber auch dann Energie übertragen, wenn benachbarte Stromleiter stets dieselbe Stromrichtung aufweisen.

Die Topologie der Stromleiter kann auf vielerlei Weise variiert werden, so können sämtliche Stromleiter des Bodenbelags in Serie geschaltet sein und somit einen einzelnen Stromkreis bilden oder es sind mehrere parallele und gegebenenfalls einzeln schaltbare Stromkreise vorgesehen. Dadurch wird eine individuelle Steuerung der Verbraucher ermöglicht und eine verbesserte Absicherung bei Störungen erreicht.

Bei einem Teppich, dessen Kettfäden Füllketten, Bindeketten und Polketten umfassen, sind die Stromleiter mit Vorteil als Füllketten eingewoben. Diese lassen sich beim Webvorgang vergleichsweise einfach ganz oder teilweise durch flexible Stromleiter ersetzen, sie werden zudem beim Webvorgang und beim späteren Einsatz des Bodenbelags weniger beansprucht als die Bindekette oder gar die Polkette. Die Kettfäden der Füllkette sind zudem beim fertig gewobenen Bodenbelag im Wesentlichen gerade langgestreckt, was die direkte leitende Ankopplung im Bereich der Einspeisung (und gegebenenfalls im Bereich der Kopplungseinrichtung) vereinfacht und die induktive Ankopplung verbessert.

Anstelle der Füllkette kann auch die Bindekette oder der Schuss ganz oder teilweise durch stromleitendes, flexibles Material ersetzt werden.

Mit Vorteil weist jeder Stromleiter eine umhüllende Isolationsschicht auf, z. B. eine isolierende Lack- oder Kunststoffschicht oder eine Umhüllung. Diese verhindert, dass die Leiter von der Oberfläche des Bodenbelags her irrtümlich kontaktiert werden und vermeidet Kurzschlüsse bei feuchtem oder durchnässtem Bodenbelag. Um die Leiter direkt leitend zu kontaktieren, wird die Isolationsschicht in einem entsprechenden Bereich teilweise entfernt (z. B. bei der Einspeisung), oder sie wird durchstochen (z. B. bei der Kontaktierung mittels eines nadelartigen Elements). Auf die induktive Kontaktierung hat die Isolationsschicht keinen wesentlichen nachteiligen Einfluss.

Alternativ, z. B. wenn der Teppichflor sehr hoch und/oder dicht ist und nicht mit einer Durchnässung des Bodenbelags gerechnet werden muss, kann auf die Isolierung verzichtet werden.

Die Stromleiter sind vorzugsweise als metallische Litzen, insbesondere Kupferlitzen, ausgebildet, d. h. sie bestehen aus einer Mehrzahl dünner Einzeldrähte. Litzen, insbesondere Kupferlitzen, weisen eine gute Leitfähigkeit auf, sind dauerhaft und sehr biegsam, lassen sich damit leicht im Webprozess verarbeiten und schränken die Verformbarkeit des Bodenbelags nicht zusätzlich ein.

Anstelle von Litzen können auch übliche Drähte eingesetzt werden, deren Biegsamkeit dem Webprozess und der gewünschten Verformbarkeit des Bodenbelags angepasst ist.

Der Abstand zweier benachbarter Stromleiter beträgt jeweils mit Vorteil 0.5 - 2 cm. Dadurch lässt sich auch bei kompakten Kopplungseinrichtungen eine ausreichende Energieübertragung sicherstellen. Benachbarte Drähte sind zudem ausreichend weit voneinander entfernt, dass nachteilige gegenseitige elektrische Beeinflussungen vermieden werden können.

Die erfindungsgemässe Anordnung zur Stromversorgung hat einen breiten Anwendungsbereich. So können Einrichtungen wie Ständerleuchten, Stromversorgungen und Beleuchtungsmittel frei stehender Einrichtungselemente, Computer, Anzeigepanels etc. auf einfache Weise mit Strom versorgt werden. Die Anordnung ist besonders auch in Messehallen einsetzbar, wo die Einrichtung regelmässig umgebaut wird und somit Stromverbraucher an unterschiedlichen Stellen positioniert werden müssen. Ein weiterer Einsatzbereich ergibt sich im Transportwesen, wo die erfindungsgemässe Anordnung z. B. im Innenraum von Flugzeugen, Eisenbahnwagen, Bussen oder Schiffen eingesetzt werden kann. Mittels des erfindungsgemässen Bodenbelags wird es auf einfache Weise ermöglicht, Verbraucher an verschiedenen Orten des Innenraums mit Strom zu versorgen.

Die Anordnung ist ebenfalls geeignet für die Stromversorgung beweglicher Verbraucher (z. B. von Fahrzeugen oder selbstgesteuerten Geräten wie Staubsaugern), welche sich auf dem textilen Bodenbelag bewegen. So kann ein Akkumulator eines solchen beweglichen Verbrauchers mit Strom aufgeladen werden, welcher von den Stromleitern durch die Kopplungseinrichtung induktiv aufgenommen und weiter zur Ladevorrichtung transportiert wird. Der Ladevorgang kann immer dann erfolgen, wenn das Fahrzeug stillsteht, unabhängig von dessen Position. Bei geeigneter Auslegung der Kopplungseinrichtung kann das Aufladen auch während dessen Fahrt erfolgen oder der Antrieb des beweglichen Verbrauchers wird direkt (induktiv) vom Bodenbelag gespeist. Eine spezifische Anwendung der erfindungsgemässen Anordnung ist die Stromversorgung von elektrisch angetriebenen Fahrzeugen zum Personen- oder Warentransport, wie sie in grossräumigen Gebäuden (z. B. Flughäfen) mit textilem Bodenbelag eingesetzt werden. Weil die Fahrzeuge nicht periodisch zur Ladestation zurück gefahren werden müssen, sondern sämtliche Stillstandszeiten zum Laden der Akkumulatoren genutzt werden können, wird die Verfügbarkeit der Fahrzeuge stark erhöht. Die anfallenden Transporte können somit mit einer geringeren Anzahl von Fahrzeugen ausgeführt werden.

Die im erfindungsgemässen Bodenbelag integrierten Stromleiter lassen sich bei geeigneter Dimensionierung und entsprechend gewählten Strömen auch zur Beheizung des Bodens einsetzen. Sie können ausserdem auch (oder ausschliesslich) für die Datenübertragung genutzt werden, insbesondere können die angeschlossenen Verbraucher mittels Dateninformationen gesteuert werden, welche dem Nutzstrom überlagert sind. Anstelle einer Überlagerung können die Daten in gesonderten, im Bodenbelag integrierten Leitungen übertragen werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1A-E: Schematische Darstellungen verschiedener Realisierungen eines erfindungsgemässen Bodenbelags;
- Fig. 2A, B: schematische Darstellungen verschiedener erfindungsgemässer Anordnungen zur Stromversorgung;
- Fig. 3: ein vertikaler Querschnitt durch einen erfindungsgemässen Bodenbelag und eine erfindungsgemässe Kopplungseinrichtung; und
- Fig. 4: ein Blockschema einer erfindungsgemässen Kopplungseinrichtung.

Grundsätzlich sind in den Figuren gleiche Teile mit gleichen Bezugszeichen versehen.

### Wege zur Ausführung der Erfindung

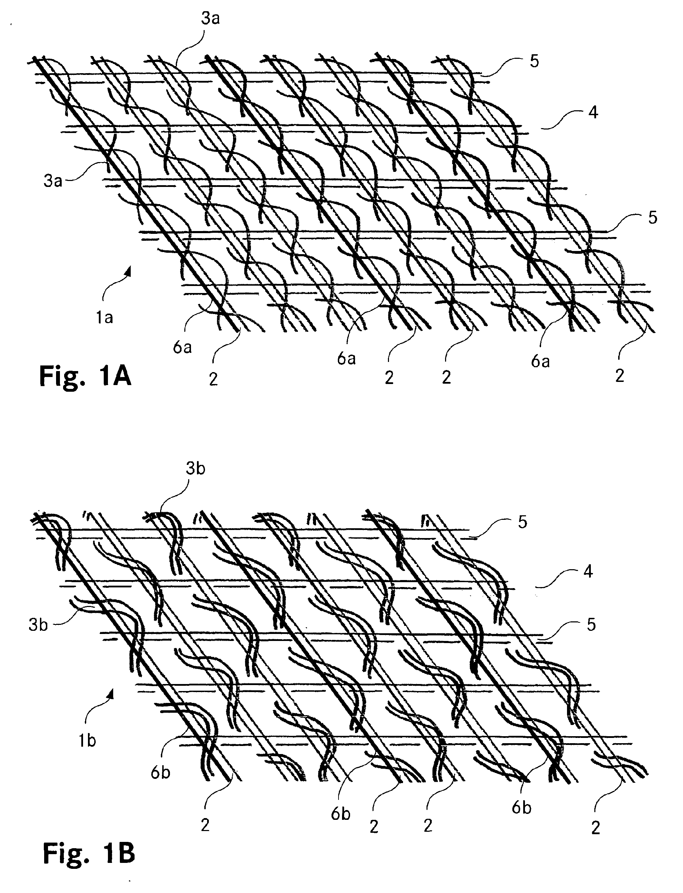

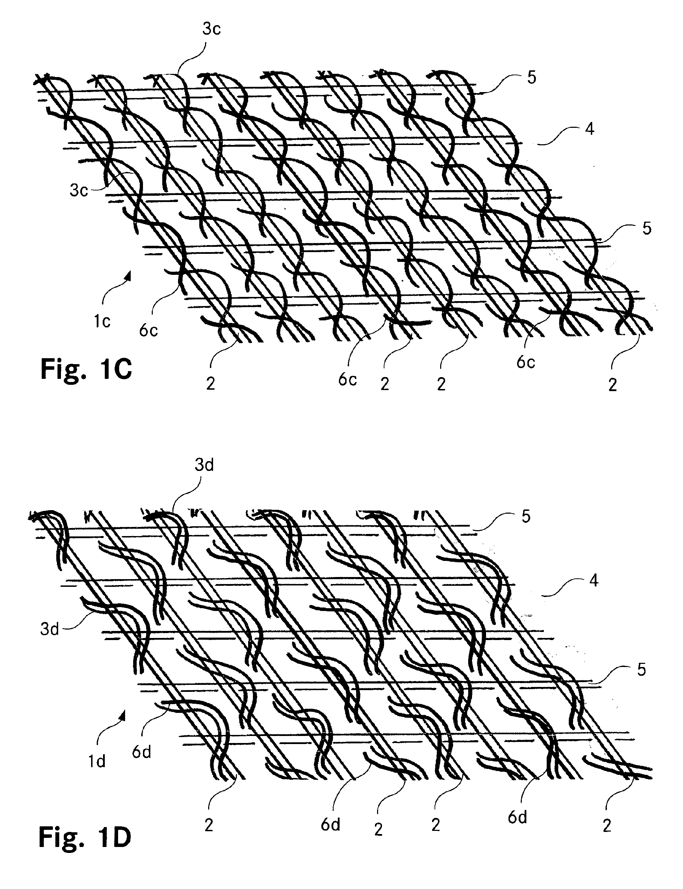

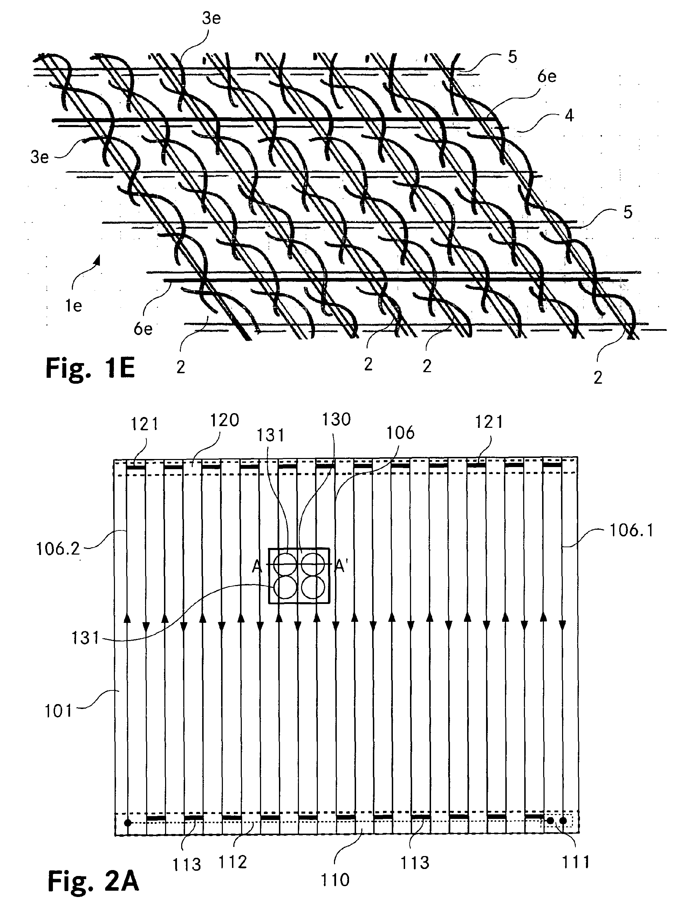

Die Figuren 1A-E sind schematische Darstellungen verschiedener Realisierungen eines erfindungsgemässen textilen gewobenen Bodenbelags 1a...1e. Der Bodenbelag 1 (Teppich) umfasst jeweils ein (längs laufendes) Kettsystem mit Füllkette 2, Bindekette 3a...3e und Polkette 4 sowie ein (quer laufendes) Schusssystem mit dem Schuss 5. Die Stromleiter 6a...6e sind in das Gewebe integriert. Der Aufbau der dargestellten Ausführungsbeispiele ist wie folgt:

| **Figur** | **Abbindung (Verlauf der Bindekette)** | **leitendes Material (Kupferlitze)** | **Abstand zwischen Stromleitern** |
|---|---|---|---|
| 1A | 1:1 | Füllkette | 3 Ketten |
| 1B | 2:2 | Füllkette | 3 Ketten |
| 1C | 1:1 | Bindekette | 3 Ketten |
| 1D | 2:2 | Bindekette | 3 Ketten |
| 1E | 1:1 | Schuss | 3 Schüsse |

Die Stromleiter 6 lassen sich somit als Teil der Füllkette 2, der Bindekette 3 oder des Schusses 5 während des Webvorgangs in den textilen Bodenbelag 1 einarbeiten. Dazu werden die entsprechenden Kett- oder Schussfäden durch isolierte Kupferlitzen als Stromleiter 6 ersetzt. Die Anzahl Kettfäden beträgt beispielsweise 320/m, bei den dargestellten Ausführungsbeispielen ist der Abstand zwischen benachbarten parallelen Stromleitern 6 somit ungefähr 1 cm.

Wenn die Stromleiter 6 Teil des Kettsystems sind, kann das leitende Material in den Ketten während des Webvorgangs entweder auf dem jeweiligen Kettbaum mit den anderen Füll- bzw. Bindeketten eingebracht oder separat aufgesteckt werden.

Besonders von Vorteil sind die Ausführungsformen gemäss Figuren 1A, 1B, bei welchen das leitende Material einen Teil der Füllkette 2 bildet. Diese lässt sich im Rahmen des Webvorgangs besonders einfach in das Gewebe einarbeiten, und ist beim fertig gewobenen Teppich im Wesentlichen gerade gestreckt, was die mechanische Beanspruchung der Stromleiter minimiert und optimale elektrische Eigenschaften ermöglicht.

Der Querschnitt der Kupferlitze sowie der Abstand zwischen den eingewobenen Stromleitern können den Parametern des Teppichs (Querschnitt der verwobenen Fäden, Fadendichte etc.) sowie der zu transportierenden Energiemenge angepasst werden.

Anstelle von Kupfer können auch Litzen aus einem anderen Material bzw. aus biegsamen Drähten verwendet werden.

Die Erfindung ist nicht auf die aufgeführten, beispielhaften Realisierungen des Bodenbelags beschränkt. Die Anzahl und Konfiguration der Kett- und Schusssysteme sowie die Materialien für die Kett- und Schussfäden (insbesondere für die Polkette) können in einem weiten Bereich variiert werden, wie es auf dem Gebiet der Teppichherstellung an sich bekannt ist. Anstelle des gezeigten Bouclé-Gewebes lässt sich die Erfindung auf dieselbe Weise auch beispielsweise bei Velours-oder Flachteppichen realisieren.

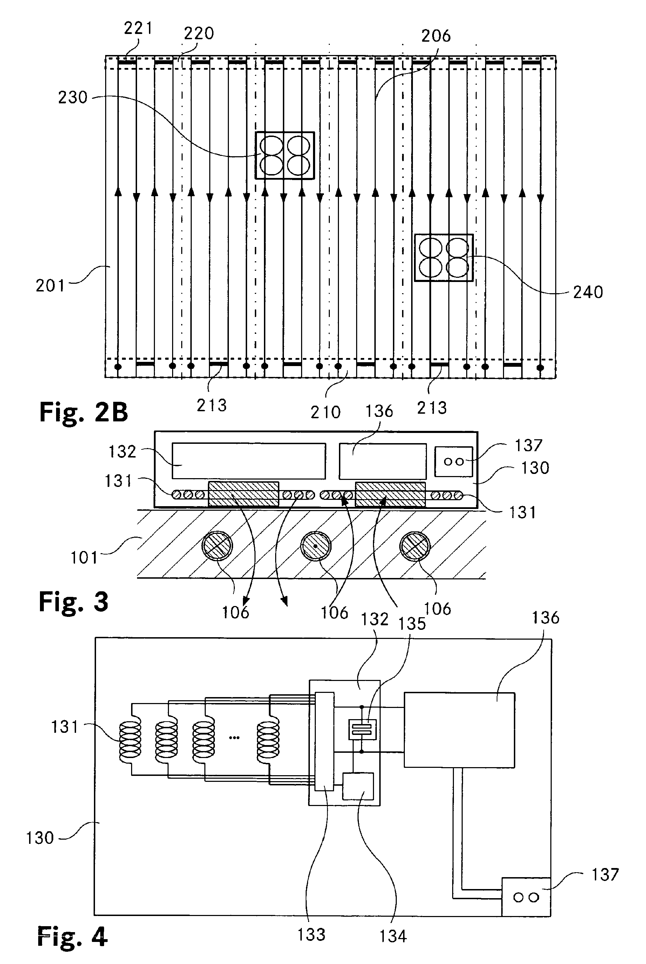

Die Figuren 2A, 2B sind schematische Darstellungen verschiedener erfindungsgemässer Anordnungen zur Stromversorgung. Die Figur 2A zeigt einen Bodenbelag 101 gemäss einer der Figuren 1A-1E mit einer Reihe von parallel verlaufenden Stromleitern 106. An einer Längskante ist auf der Unterseite des Bodenbelags 101 eine Einspeisung 110 angeordnet, welche sich quer zu den Stromleitern 106 erstreckt. Die Einspeisung 110 umfasst ein Anschlussterminal 111 mit zwei Anschlussklemmen. Eine der Anschlussklemmen stellt einen direkten Kontakt mit dem äussersten Stromleiter 106.1 am rechten Rand des Bodenbelags 101 her, die andere ist mittels einer Verbindungsleitung 112 mit dem äussersten Stromleiter 106.2 am linken Rand des Bodenbelags 101 leitend verbunden. Die Einspeisung 110 umfasst weiter mehrere Verbindungsstege 113, welche jeweils zwei benachbarte Stromleiter 106 leitend verbinden. Die Verbindungsstege 113 sind so angeordnet, dass von aussen gezählt die Stromleiter 2/3, 4/5, 6/7, 8/9 etc. miteinander leitend verbunden sind.

Auf der der Einspeisung 110 gegenüberliegenden Längsseite ist ein Verbindungselement 120 auf der Unterseite des Bodenbelags 101 angeordnet. Dieses erstreckt sich ebenfalls über die ganze Breite des Bodenbelags 101 und umfasst Verbindungsstege 121, welche ebenfalls jeweils zwei benachbarte Stromleiter 106 leitend verbinden. Die Verbindungsstege 121 sind so angeordnet, dass von aussen gezählt die Stromleiter 1/2, 3/4, 5/6, 7/8 miteinander verbunden sind.

Im Bodenbelag 101 wird somit ein einziger Stromkreis gebildet, welcher von der ersten Anschlussklemme des Anschlussterminals 111 über sämtliche Stromleiter 106 im Bodenbelag 101 und die Verbindungsleitung 112 zur zweiten Anschlussklemme führt.

An die Anschlussklemmen wird eine Wechselstromquelle angeschlossen, welche beispielsweise einen elektrischen Strom mit einer Frequenz von 40 kHz und einer Spannung von 20 V erzeugt. Zur Auskopplung von elektrischer Energie wird eine Kopplungseinrichtung 130 in die Nähe der Teppichoberfläche gebracht (beispielsweise auf diese gestellt). Die Kopplungseinrichtung 130 umfasst mehrere horizontal angeordnete Spulen 131, in welchen aufgrund des in den Stromleitern 106 erzeugten Magnetfeldes ein Strom induziert wird. Dieser Strom wird abgegriffen, transformiert und steht anschliessend zur Speisung eines Verbrauchers zur Verfügung (vgl. unten). Die Dimensionen und Abstände der Spulen 131 sind so gewählt, dass bei beliebiger Anordnung der Kopplungseinrichtung 130 zumindest in einer der Windungen ein Strom induziert wird, insbesondere sind die Quer- und Längsabstände der Windungszentren unterschiedlich vom Abstand der Stromleiter bzw. von einem ganzzahligen Vielfachen davon.

Die Figur 2B zeigt eine Variante der Anordnung der Figur 2A, bei welcher im Bodenbelag 201 mehrere Stromkreise gebildet sind. Der Bodenbelag 201 und das Verbindungselement 220 entsprechen den Pendants in der Figur 2A, d. h. die benachbarten Stromleiter 1/2, 3/4, 5/6, 7/8 sind wiederum miteinander durch Verbindungsstege 221 miteinander verbunden. Von der ersten Ausführungsform unterscheidet sich die Anordnung gemäss Figur 2B aber durch eine unterschiedliche Einspeisung 210. Diese umfasst mehrere Anschlussklemmen für voneinander unabhängige Stromkreise, welche von aussen gezählt eine direkte Kontaktierung der Stromleiter 1, 4, 5, 8, 9, 12, 13 etc. ermöglichen, sowie Verbindungsstege 213, welche die Stromleiter 2/3, 6/7, 10/11 etc. miteinander verbinden. Es werden somit mehrere unabhängig speisbare Stromkreise mit je vier längs verlaufenden Stromleitern 206 gebildet. In der Figur 2B sind zwei Kopplungseinrichtungen 230, 240 dargestellt, welche identisch sind mit der Kopplungseinrichtung gemäss Figur 2A. Sie sind in zwei Raumbereichen des Bodenbelags 201 positioniert, welche voneinander unabhängige Stromkreise aufweisen und können somit auf einfache Weise separat mit Strom versorgt und gesteuert werden.

Die Leitertopologie kann auf vielerlei Weise weiter variiert werden. So kann beispielsweise jeder Leiter einzeln und gegebenenfalls an beiden Enden von aussen kontaktierbar sein, um beispielsweise Steuerdaten zu übertragen oder als Sensor (z. B. einer Alarmanlage) zu dienen. In diesem Fall wird beidseitig eine Einspeisung bzw. ein Kontaktelement vorgesehen. Die Stromrichtung kann im Gegensatz zu den dargestellten Ausführungen für alle Leiter jeweils dieselbe sein.

Die Figur 3 zeigt einen vertikalen Querschnitt durch einen erfindungsgemässen Bodenbelag und eine erfindungsgemässe Kopplungseinrichtung, entlang der Linie A-A' in der Figur 2A. Im Ausschnitt dargestellt sind drei im Bodenbelag 101 verlaufende Stromleiter 106 mit Isoliermantel, wobei aufgrund der gewählten Leitertopologie die Stromrichtung der beiden äusseren Leiter 106 zu derjenigen im mittleren Leiter 106 entgegengesetzt ist.

Auf dem Bodenbelag 101 steht die Kopplungseinrichtung 130 mit mehreren Spulen 131 mit Ferritkern. Die Figur 4 zeigt ein Blockschema der Kopplungseinrichtung 130. Schematisch dargestellt sind nur die wichtigsten Bauelemente. Weitergehende Angaben zu Kopplungseinrichtungen können beispielsweise der WO 96/02970 (Auckland Uniservices Limited) entnommen werden.

Das von den Stromleitern 106 erzeugte Magnetfeld induziert Ströme in den Windungen der Spulen 131. Im in der Figur 3 dargestellten Beispiel sind die Spulen 131 so positioniert, dass die Stromrichtungen in den gezeigten zwei Spulen 131 jeweils entgegengesetzt sind. Je nach Positionierung der Kopplungseinrichtung 130 können die Ströme aber auch jeweils in derselben Richtung fliessen. Damit die induzierten Ströme stets konstruktiv überlagert werden können, umfasst die Kopplungseinrichtung 130 einen Überlagerer 132 mit Messkreisen und Umschaltern 133, einer internen Steuerung 134 sowie einer regelbaren Kapazität 135. Letztere dient zur Anpassung des sekundären Schwingkreises an die Resonanzfrequenz des Primärkreises.

Der erzeugte Strom wird anschliessend in einer Stromregelungseinheit 136 mit an sich bekannten Komponenten hinsichtlich Stromart (AC/DC), Spannung und gegebenenfalls Frequenz aufbereitet und an einem Anschlussterminal 137 zur Verfügung gestellt. An dieses Anschlussterminal 137 wird ein Verbraucher angeschlossen. Die Kopplungseinheit 130 kann ebenfalls direkt im Verbraucher (z. B. einer Leuchte, einer Ladeeinrichtung für einen Akkumulator eines Fahrzeugs etc.) integriert sein.

Der innere Aufbau der Kopplungseinrichtung kann den übertragenen elektrischen Leistungen, dem Aufbau des Bodenbelags und dem Einsatzzweck des Verbrauchers angepasst werden. Die Kopplungseinrichtung kann anstelle oder zusätzlich zu den Mitteln für die Energieübertragung auch Datenübertragungsmittel aufweisen, mittels welchen aus den Stromleitern aufgenommene Steuer- oder Nutzdaten an den Verbraucher oder an Datenendgeräte übertragen werden können.

Anstelle einer induktiven Energie- bzw. Datenübertragung sind auch andere Techniken möglich. Eine Kopplungseinrichtung kann beispielsweise wie oben erwähnt Mittel zum direkten leitenden Kontakt mit den Stromleitern im Bodenbelag aufweisen.

Zusammenfassend ist festzustellen, dass durch die Erfindung eine Anordnung zur Versorgung eines Verbrauchers mit elektrischer Energie geschaffen wird, welche eine hohe Flexibilität ermöglicht und sich gut in Räume integrieren lässt.

## Patentansprüche

1. Anordnung zur Versorgung eines Verbrauchers mit elektrischer Energie einer Stromquelle, umfassend
a) einen textilen, gewobenen Bodenbelag (1a... 1e; 101; 201) mit längslaufenden Kettfäden (2, 3a...3e, 4) und querlaufenden Schussfäden (5), wobei drei oder mehr beabstandete, zueinander im Wesentlichen parallele Stromleiter (6a...6e; 106; 206) entweder als Kettfäden oder als Schussfäden eingewoben sind;
b) eine Einspeisung (110; 210) zum Anschluss der Stromleiter (6a...6e; 106; 206) an die Stromquelle; und
c) eine Kopplungseinrichtung (130; 230, 240) zur Aufnahme von elektrischer Energie aus den Stromleitern (6a...6e; 106; 206) im Bodenbelag (1a... 1e; 101; 201) und zum Weitertransport an den Verbraucher, wenn die Kopplungseinrichtung (130; 230, 240) in einen Stromaufnahmebereich des Bodenbelags (1a...1e; 101; 201) gebracht wird.

2. Anordnung nach Anspruch 1, **dadurch gekennzeichnet, dass** die Kopplungseinrichtung (130; 230, 240) derart ausgebildet ist, dass elektrische Energie induktiv aus den Stromleitern (6a...6e; 106; 206) aufgenommen werden kann.

3. Anordnung nach Anspruch 2, **dadurch gekennzeichnet, dass** die Kopplungseinrichtung (130; 230, 240) mindestens eine Windung (131) zur induktiven Kopplung mit den Stromleitern (6a...6e; 106; 206) umfasst.

4. Anordnung nach Anspruch 3, **dadurch gekennzeichnet, dass** mehrere, räumlich verteilte Windungen (131) vorgesehen sind, welche nach Bedarf zusammenschaltbar sind.

5. Anordnung nach einem der Ansprüche 1 bis 4, **dadurch gekennzeichnet, dass** die Einspeisung (110; 210) an einem Rand des Bodenbelags (1a... 1e; 101; 201) angeordnete Flachkontakte zur leitenden Kontaktierung der Stromleiter (6a...6e; 106; 206) umfasst.

6. Anordnung nach einem der Ansprüche 1 bis 5, **dadurch gekennzeichnet, dass** die Einspeisung (110; 210) derart ausgebildet und angeordnet ist, dass Stromrichtungen in benachbarten parallelen Stromleitern (6a...6e; 106; 206) jeweils entgegengesetzt sind.

7. Textiler, gewobener Bodenbelag (1a...1e; 101; 201), insbesondere für eine Anordnung nach einem der Ansprüche 1 bis 6, mit längslaufenden Kettfäden (2, 3a...3e, 4) und querlaufenden Schussfäden (5), **dadurch gekennzeichnet, dass** drei oder mehr beabstandete, zueinander im Wesentlichen parallele Stromleiter (6a...6e; 106; 206) entweder als Kettfäden (2, 3a...3e, 4) oder als Schussfäden (5) eingewoben sind.

8. Bodenbelag nach Anspruch 7, **dadurch gekennzeichnet, dass** die Kettfäden Füllketten (2), Bindeketten (3, 3b) und Polketten (4) umfassen, wobei die Stromleiter (6a, 6b) als Füllketten (2) eingewoben sind.

9. Bodenbelag nach Anspruch 7 oder 8, **dadurch gekennzeichnet, dass** jeder Stromleiter (6a...6e; 106; 206) eine umhüllende Isolationsschicht aufweist.

10. Bodenbelag nach einem der Ansprüche 7 bis 9, **dadurch gekennzeichnet, dass** die Stromleiter (6a...6e; 106; 206) als metallische Litzen, insbesondere Kupferlitzen, ausgebildet sind.

11. Bodenbelag nach einem der Ansprüche 7 bis 10, **dadurch gekennzeichnet, dass** der Abstand zweier benachbarter Stromleiter (6a...6e; 106; 206) 0.5 - 2 cm beträgt.
